# EUROPEAN PATENT APPLICATION

(11) **EP 4 459 464 A1**
(43) Date of publication of application: **06.11.2024**
(21) Application number: 22922911.7
(22) Date of filing: 29.01.2022
(51) Int. Cl.: G06F 9/50, G06F 16/901

(54) **INFORMATION PROCESSING METHODS AND APPARATUS, PLATFORM AND COMPUTER-READABLE MEDIUM**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN)
(74) Representative: Isarpatent
(86) International application number: PCT/CN2022/075089
(87) International publication number: WO 2023/142081

(57) **Abstract**

The embodiments of the present application relate to the technical field of industry, in particular to information processing methods and apparatus, a platform and a computer-readable medium. A preset resource block is stored in a resource library, wherein the resource block is mapped to a resource of an application scenario, and the resource comprises: a physical device, human resources and general resources; and the resource library is displayed on a graphical user interface. Construction of a resource tree performed by a user on the graphical user interface is received. An instance of the resource tree is generated in response to the construction of the resource tree. The embodiments of the present application can rapidly and conveniently display, on a graphical user interface, various resources corresponding to an application scenario in a way of an instance of a resource tree.

## Description

### TECHNICAL FIELD

The embodiments of this application mainly relate to the technical field of industry, in particular to information processing methods and apparatus, a platform and a computer-readable medium.

### BACKGROUND

According to Gartner's definition, Operational Technology (OT), which integrates hardware and software, detects or triggers a change of a process or an event in an enterprise through direct monitoring and/or control of physical devices (referred to as OT devices). OT uses computers to monitor or change the physical state of an Industrial Control System (ICS). The ICS is a computer-based facility, system and device, which is used for remotely monitoring and/or controlling key industrial processes so as to realize physical functions. The term "OT" is used to distinguish the ICS from the traditional Information Technology (IT) system in terms of technical implementation and functionality.

The integration of IT domain and OT domain has become increasingly important in the process of digital transformation of enterprises. An urgent problem is how to collect data in the OT domain and control the OT domain process in an easy-to-understand way instead of rr domain programming.

At present, there are many IT low code development tools or platforms in the market. Some tools are targeted at Internet of Things usage scenarios for experienced IT engineers, and it is difficult for OT engineers and junior IT engineers to understand their paradigms. Some tools are more suitable for usage scenarios of low code development of the IT domain, but not for the OT domain.

Therefore, there is an urgent need for a low code development scheme suitable for the OT domain, especially how to generate a topological graph of an industrial scenario on a graphical user interface.

### SUMMARY

Embodiments of this application provide information processing methods and apparatus, a platform and a computer-readable medium, in order to solve the problem of how to generate a topological graph of an application scenario on a graphical user interface.

A first aspect provides an information processing method, including: storing a preset resource block in a resource library, where the resource block is mapped to a resource of an application scenario, and the resource includes: a physical device, human resources and general resources; displaying the resource library on a graphical user interface; receiving construction of a resource tree performed by a user on the graphical user interface; and generating an instance of the resource tree in response to the construction of the resource tree.

A second aspect provides an information processing method, including: storing a preset resource block in a resource library, where the resource block is mapped to a physical device of an application scenario; scanning a plurality of physical devices in the application scenario by ways of a multicast DNS server; obtaining network parameters and names of the plurality of physical devices; and retrieving a resource block corresponding to each physical device among the plurality of physical devices from the resource library according to the network parameters and the names of the plurality of physical devices, and generating the instance of the resource tree on the graphical user interface, where the resource block refers to a node of the resource tree.

A third aspect provides an information processing platform, including: at least one memory, configured to store computer-readable codes; and at least one processor, configured to call the computer-readable codes to perform the steps in the method provided by the first aspect or the second aspect.

A fourth aspect provides a computer-readable medium, storing computer-readable instructions. The computer-readable instructions, when executed by a processor, cause the processor to perform the steps in the method provided by the first aspect or the second aspect.

A fifth aspect provides a computer program product, tangibly stored on a computer-readable medium and including computer-readable instructions. The computer-readable instructions, when executed, cause at least one processor to perform the steps in the method provided by the first aspect or the second aspect.

A sixth aspect provides an information processing apparatus, including components for performing the steps of the method provided by the first aspect.

A seventh aspect provides an information processing apparatus, including components for performing the steps of the method provided by the second aspect.

According to the embodiments of this application, various resources corresponding to an application scenario can be rapidly and conveniently displayed on a graphical user interface in a way of an instance of a resource tree.

### BRIEF DESCRIPTION OF THE DRAWINGS

The following accompanying drawings are only intended to give schematic illustrations and explanations of the embodiments of this application, but are not intended to limit the scope of the embodiments of this application. In the figures:
FIG. 1 is a flowchart of an information processing method according to an embodiment of this application;
FIG. 2 is a schematic diagram of an instance of a resource tree created according to an embodiment of this application;
FIG. 3 is a schematic diagram of an instance of a behavior tree created according to an embodiment of this application;
FIG. 4 is a flowchart of another information processing method according to an embodiment of this application;
FIG. 5 is a schematic diagram of an information processing apparatus according to an embodiment of this application;
FIG. 6 is a schematic diagram of another information processing apparatus according to an embodiment of this application; and
FIG. 7 is a schematic diagram of an information processing platform according to an embodiment of this application.

### Descriptions of reference numerals:

100: Information processing 101-104: Method steps method
400: Information processing 401-405: Method steps method
50: Information processing 51: Graphical interface module 52: Presetting module apparatus
53: Edit processing module
60: Information processing 61: Presetting module 62: Scanning module apparatus
63: Edit processing module
700: Information processing 701: Memory 702: Processor platform

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the embodiments of this application. Various processes or components may be omitted, replaced, or added in each example according to requirements. For example, the described method may be performed according to a sequence different from the sequence described herein, and steps may be added, omitted, or combined. In addition, features described in some examples may also be combined in other examples.

As used in this specification, the term "include" and variants thereof represent open terms, and means "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes the embodiments of this application with reference to the accompanying drawings.

OT devices may include, but not limited to, Internet of Things (IoT) devices, Programmable Logic Controllers (PLCs), Robotics, Manual Processes, Industrial Personal Computers (IPCs), etc.

The applicable fields of the embodiments of this application include, but are not limited to, Industrial Automation, Logistics, Laboratory, Maritime, Smart Grid, Electric Vehicle Infrastructure, Electric Vehicle, Building Automation, Smart City, Water Treatment, Garbage Recycling, Smart Farm, etc.

IT devices may include, but not limited to, a Manufacturing Operation Management (MOM) system, a manufacturing execution system (MES), an Enterprise Resource Planning (ERP) system, an Enterprise Service Bus (ERP), a Product Lifecycle Management (PLM) system, etc.

Low Code is essentially computer software, which may be deployed on an IPC or a single board computer (SBC), and may also be extended to processors, computers, processors, etc. Low Code provides a graphical user interface for users to perform OT domain and/or IT domain low code development.

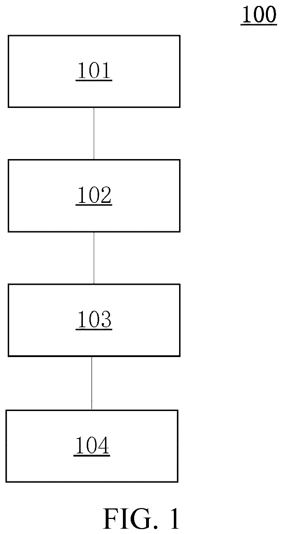

FIG. 1 is a flowchart of an information processing method according to an embodiment of this application. As shown in FIG. 1, the information processing method includes:
Step 101: A preset resource block in a resource library is stored. The resource block is mapped to a resource of an application scenario. The resource includes: a physical device, human resources and general resources.

Common attributes of the same type of resources are preset in one resource block. The resources in the application scenario may be any resources in the corresponding real physical world. In an example of an industrial scenario, the resources may include: industrial devices, operators and general resources such as software systems, protocols or services.

Step 102: The resource library is displayed on a graphical user interface.

Step 103: Construction of a resource tree performed by a user on the graphical user interface is received.

The resource block is a node in the resource tree, and the resource tree is a tree view that connects a plurality of resource blocks together.

Selection of a plurality of resource blocks performed by the user in the resource library is received, and an indication performed by the user on a connection relationship between any two resource blocks among the plurality of resource blocks is received.

Step 104: an instance of the resource tree is generated in response to the construction of the resource tree.

The so-called "instance" corresponds to the instance in programming languages. An instance refers to a concrete thing, such as an instance of a cloud server, which refers to a real host that users can use. Similarly, instantiation refers to the process of concretizing an abstract concept class into a real object of this class. Generating an instance of a resource tree includes generating instances of a plurality of resource blocks selected by the user, and generating an instance or label of a connection relationship between any two resource blocks.

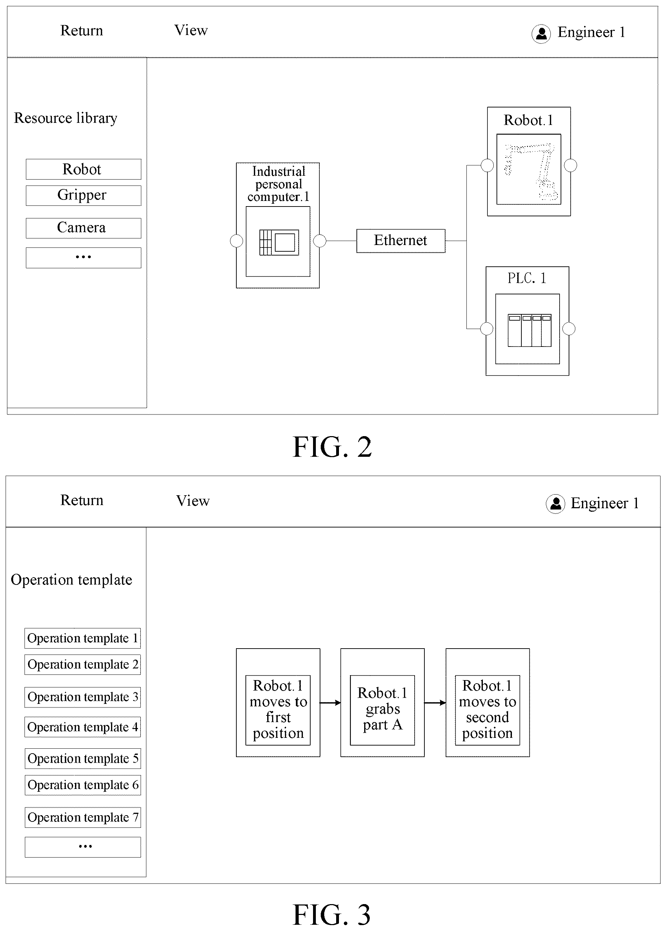

First, FIG. 2 is a schematic diagram of an instance of a resource tree created according to an embodiment of this application. As shown in FIG. 2, generating instances of a plurality of resource blocks selected by the user on the graphical user interface is to instantiate a resource block into a corresponding resource. Optionally, while generating the instances of the plurality of resource blocks selected by the user, names of the instances of the plurality of resource blocks are generated. The name of the instance of each resource block among the names of the instances of the plurality of resource blocks is unique in the resource tree, that is, the globally unique namespace. Optionally, the name of the instance of the resource block includes an index number of the instance of the resource block. For example, when the user drags and drops two "Computer Numerical Control (CNC) machine tool" icons on the graphical user interface, an instance of "CNC machine tool.l" and an instance of "CNC machine tool.2" will be generated on the graphical user interface, thereby ensuring the name of the instance of each resource block to be unique in the resource tree. Optionally, the name of the instance may be edited by the user or randomly assigned.

Second, an instance or label of the connection relationship between any two resource blocks is generated according to the connection relationship between any two resource blocks among the plurality of resource blocks. Optionally, when two physical devices are connected by ways of a communication medium, such as Ethernet, USB or serial port, an instance corresponding to the communication medium may be generated on the graphical user interface. When two physical devices/a non-physical device and a physical device are connected, a label corresponding to the connection relationship may be generated on the graphical user interface.

In this embodiment of this application, specific resources corresponding to an application scenario, including physical devices, human resources and general resource, are all preset in the resource block for the user to construct the resource tree on the graphical user interface, and then the corresponding instance of the resource tree is generated, so that various resources corresponding to an application scenario can be rapidly and conveniently displayed on a graphical user interface in a way of an instance of a resource tree.

In some embodiments, after generating the instances of the plurality of resource blocks selected by the user, network parameters of a third resource corresponding to an instance of a third resource block are configured into the instance of the third resource block, so that the third resource can be controlled by ways of the instance of the third resource block. A state of connection between the instance of the third resource block and the third resource is detected, and the state of connection is reflected into the instance of the third resource block. Optionally, green may represent a connected state, red may represent a connection error state, and gray may represent an offline or not yet attempted state, so that the status of connection between the instance of the resource block and the corresponding resource can be obtained visually and quickly.

In some embodiments, the resource block includes a parent node and a child node. The parent node is used for defining a communication medium of the resource block which can be connected. The child node is used for defining a connectable communication medium of the resource block. Optionally, if a parent node of a first resource block and a child node of a second resource block among the plurality of resource blocks are connected, a common communication medium contained in the parent node of the first resource block and the child node of the second resource block is determined, and an instance of the common communication medium is generated. Optionally, if a parent node of a first resource block and a child node of a second resource block among the plurality of resource blocks are connected, a directory corresponding to the connection relationship between the first resource block and the second resource block may be displayed synchronously on the graphical user interface. Optionally, on the graphical user interface, the parent node of the instance of the resource block may be set on the left side of the instance of the resource block, and the child node of the resource block may be set on the right side of the instance of the resource block. Assuming that the type of the parent node of the instance of the first resource block includes Ethernet, then the instance of the first resource block may be connected by an instance of any other resource block using Ethernet as the type of the child node. Similarly, assuming that the type of the child node of the instance of the second resource block includes Ethernet, serial port and USB, then, an instance of any other resource block using the Ethernet or serial port or USB as the type of the parent node may be connected to the child node of the instance of the second resource block. By ways of this embodiment of this application, the specific communication medium between two resource blocks may be displayed on the graphical user interface to the user, and fault connections of the user may be reduced.

In some embodiments, the instance of the resource block may be bound with a function block corresponding to the instance of the resource block according to the name of the instance of the resource block. The function block is used for generating a workflow under construction of a behavior tree performed by the user on the graphical user interface. Optionally, the name of the instance of the resource block may be copied into the function block corresponding to the instance of the resource block, and the instance of the resource block may be bound with the function block corresponding to the instance of the resource block. The function block is used for implementing a business operation in a workflow. In an example of an OT domain low code scenario, an OT domain low code development tool generates an OT domain workflow according to the function blocks and the relationship between the function blocks, so that the corresponding resource performs the specific operation according to the OT domain workflow. FIG. 3 is a schematic diagram of an instance of a behavior tree created according to an embodiment of this application. The function block refers to a node in the behavior tree. As shown in FIG. 3, by ways of the name "Robot. 1 ", specific actions performed by resource block instances "Robot. 1" in the resource tree in FIG. 2 and "Robot. 1" in FIG. 3, including: move to first position, grab part A, and move to second position, are linked. The three specific actions above respectively correspond to three function blocks. FIG. 3 merely shows a very simple example, and many function blocks and corresponding relationships will be involved in the actual scenario. By binding the instance of the resource block with the corresponding function block, when a plurality of different function blocks are laid out to realize the OT domain workflow, each real resource and the corresponding state of connection can be clearly obtained and rapidly located, and configurable and extensible dynamic resource planning can be realized by ways of virtual and dynamic resource mechanisms, thereby realizing the cooperation and management of multiple resources.

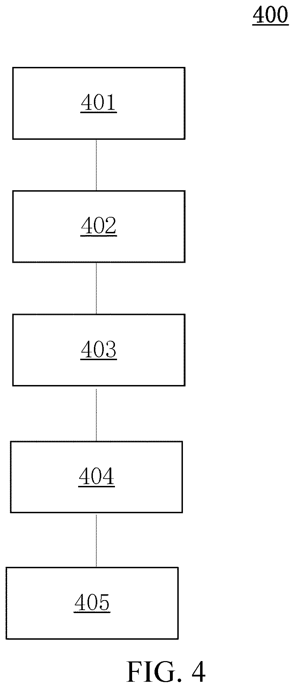

FIG. 4 is a flowchart of another information processing method according to an embodiment of this application. As shown in FIG. 4, the information processing method includes:
Step 401: A preset resource block in a resource library is stored, where the resource block is mapped to a physical device of an application scenario.
Step 402: A plurality of physical devices in the application scenario by ways of a multicast DNS server are scanned.

In a computer network, a multicast DNS protocol attempts to discover connected devices in a small network topology by broadcasting a host address, thereby resolving the host name into network parameters in the small network without the local name server.

Step 403: Network parameters and names of the plurality of physical devices are obtained. Network parameters of a physical device includes: IP address, ports, MAC address, etc.

Step 404: A resource block corresponding to each physical device among the plurality of physical devices is retrieved from the resource library according to the network parameters and the names of the plurality of physical devices.

Step 405: The instance of the resource tree on the graphical user interface is generated, where the resource block refers to a node of the resource tree.

The resource block corresponding to each physical device is retrieved from the resource library according to the name of each physical device among the plurality of physical devices, and the corresponding instance of the resource block is generated. The network parameters and the name of each physical device are configured into the corresponding instance of the resource block, on the graphical user interface, the instances of any two resource blocks having a communication medium are connected by ways of an adaptive network protocol, and an instance of the communication medium is generated.

Optionally, this embodiment of this application is applicable to the case where a plurality of physical devices are connected by Ethernet. In this case, the user does not need to construct the resource tree on the graphical user interface by manually selecting and dragging icons. Instead, network parameters and names of related physical devices are obtained by scanning by ways of a multicast DNS server, and different resource blocks having the communication medium are automatically connected by ways of an adaptive network protocol, which is more convenient and quick to use.

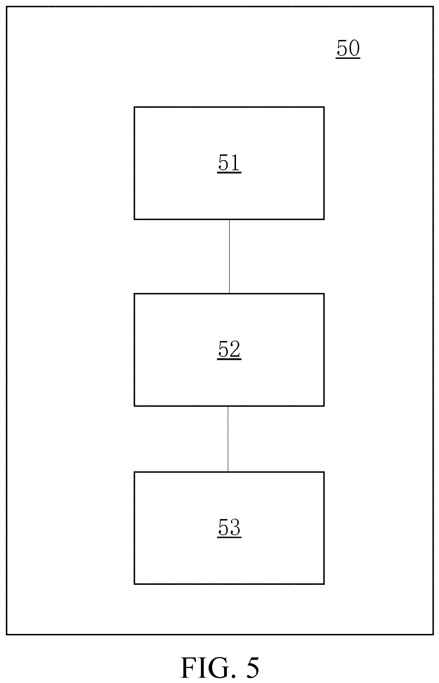

FIG. 5 is a schematic diagram of an information processing apparatus 50 according to an embodiment of this application. As shown in FIG. 5, the information processing apparatus 50 includes:
a graphical interface module 51, configured to: provide a graphical user interface on which construction of a resource tree is performed by a user;
a presetting module 52, configured to: store a preset resource block in a resource library, where the resource block is mapped to a resource of an application scenario, and the resource includes: a physical device, human resources and general resources; and display the resource library on the graphical user interface; and
an edit processing module 53, configured to: generate an instance of the resource tree in response to the construction of the resource tree.

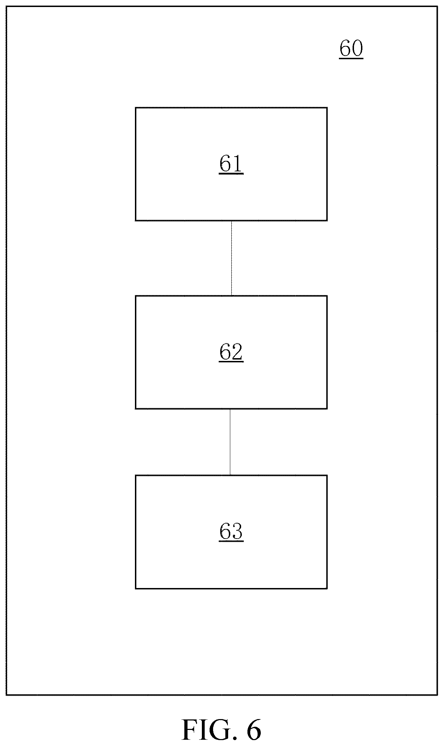

FIG. 6 is a schematic diagram of another information processing apparatus 60 according to an embodiment of this application. As shown in FIG. 6, the information processing apparatus 60 includes:
a presetting module 61, configured to: store a preset resource block in a resource library, where the resource block is mapped to a physical device of an application scenario;
a scanning module 62, configured to: scan a plurality of physical devices in the application scenario by ways of a multicast DNS server, and obtain network parameters and names of the plurality of physical devices; and
an edit processing module 63, configured to: retrieve a resource block corresponding to each physical device among the plurality of physical devices from the resource library according to the network parameters and the names of the plurality of physical devices, and generate the instance of the resource tree on the graphical user interface, where the resource block refers to a node of the resource tree.

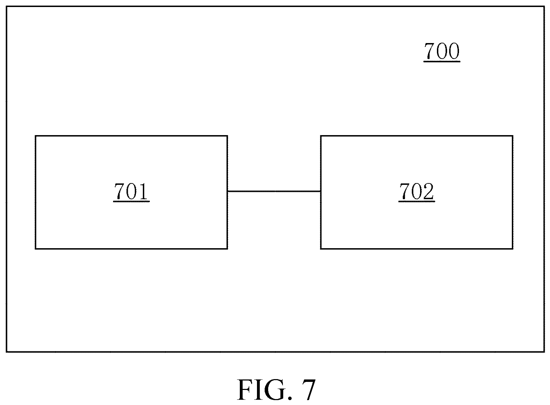

The disclosure further provides a device control platform 700. FIG. 7 is a schematic diagram of a device control platform 700 according to an embodiment of this application. As shown in FIG. 7, the device control platform 700 includes a processor 702 and a memory 701. The memory 701 stores instructions therein. The instructions, when executed by the processor 702, implement the method 100 or the method 400 as described above.

The at least one processor 702 may include a microprocessor, an application-specific integrated circuit (ASIC), a digital signal processor (DSP), a central processing unit (CPU), a graphics processing unit (GPU), a state machine, etc. Examples of the computer-readable medium include, but are not limited to, a floppy disk, a CD-ROM, a magnetic disk, a memory chip, a ROM, a RAM, an ASIC, a configured processor, an all-optical medium, all magnetic tapes or other magnetic media, or any other medium from which a computer processor can read instructions. In addition, various other forms of computer-readable media may send or carry instructions to computers, including routers, private or public networks, or other wired and wireless transmission devices or channels. The instructions may include codes of any computer programming language, including C, C++, C language, Visual Basic, java, and JavaScript.

In addition, an embodiment of this application further provides a computer-readable medium. The computer-readable medium stores computer-readable instructions thereon. The computer-readable instructions, when executed by a processor, cause the processor to perform the OT domain low code development method described above. Examples of the computer-readable medium includes a floppy disk, a hard disk, a magneto-optical disk, an optical disk (for example, a CD-ROM, a CD-R, a CD-RW, a DVD-ROM, a DVD-RAM, a DVD-RW, or a DVD-RW), a magnetic tape, a non-volatile storage card, and a ROM.

Optionally, the computer-readable instructions may be downloaded from a server computer or cloud through a communication network.

It should be noted that not all the steps and modules in the processes and the diagrams of the system structures above are necessary, and some steps or modules may be omitted according to actual needs. The execution sequence of the steps is not fixed and can be adjusted according to needs. The system structures described in the foregoing embodiments may be physical structures or logical structures, i.e., some modules may be implemented by the same physical entity, or some modules may be implemented by multiple physical entities, or may be implemented jointly by some components in multiple independent devices.

## Claims

1. An information processing method, comprising:
- storing (101) a preset resource block in a resource library, wherein the resource block is mapped to a resource of an application scenario, and the resource comprises: a physical device, human resources and general resources;
- displaying (102) the resource library on a graphical user interface;
- receiving (103) construction of a resource tree performed by a user on the graphical user interface; and
- generating (104) an instance of the resource tree in response to the construction of the resource tree.

2. The method according to claim 1, wherein
- the receiving (103) construction of a resource tree performed by a user on the graphical user interface comprises:
- receiving selection of a plurality of resource blocks performed by the user in the resource library; and
- receiving an indication performed by the user on a connection relationship between any two resource blocks among the plurality of resource blocks; and
- the generating (104) an instance of the resource tree comprises:
- generating instances of a plurality of resource blocks selected by the user; and
- generating an instance or label of the connection relationship between any two resource blocks according to the connection relationship between any two resource blocks among the plurality of resource blocks.

3. The method according to claim 2, wherein
- the resource block comprises a parent node and a child node; wherein
- the parent node is used for defining a communication medium of the resource block which can be connected; and
- the child node is used for defining a connectable communication medium of the resource block; and
- the generating an instance or label of the connection relationship between any two resource blocks according to the connection relationship between any two resource blocks among the plurality of resource blocks comprises:
- determining, if a parent node of a first resource block and a child node of a second resource block among the plurality of resource blocks are connected, a common communication medium contained in the parent node of the first resource block and the child node of the second resource block, and generating an instance of the common communication medium.

4. The method according to claim 2, wherein the method further comprises:
- generating, while generating the instances of the plurality of resource blocks selected by the user, names of the instances of the plurality of resource blocks, the name of the instance of each resource block among the names of the instances of the plurality of resource blocks being unique in the instance of the resource tree; and
- binding the instance of the resource block with a function block corresponding to the instance of the resource block according to the name of the instance of the resource block, wherein the function block is used for generating a workflow under construction of a behavior tree performed by the user on the graphical user interface.

5. The method according to claim 4, wherein the binding the instance of the resource block with a function block corresponding to the instance of the resource block according to the name of the instance of the resource block comprises:
- copying the name of the instance of the resource block into the function block corresponding to the instance of the resource block, and binding the instance of the resource block with the function block corresponding to the instance of the resource block.

6. The method according to claim 3, wherein the method further comprises:
- displaying, if the parent node of the first resource block and the child node of the second resource block among the plurality of resource blocks are connected, on the graphical user interface, a directory corresponding to the connection relationship between the first resource block and the second resource block.

7. The method according to claim 2, wherein the method further comprises:
- configuring, after generating the instances of the plurality of resource blocks selected by the user, network parameters of a third resource corresponding to an instance of a third resource block into the instance of the third resource block; and
- detecting a state of connection between the instance of the third resource block and the third resource, and reflecting the state of connection into the instance of the third resource block.

8. An information processing method, comprising:
- storing (401) a preset resource block in a resource library, wherein the resource block is mapped to a physical device of an application scenario;
- scanning (402) a plurality of physical devices in the application scenario by ways of a multicast DNS server, and obtaining (403) network parameters and names of the plurality of physical devices; and
- retrieving (404) a resource block corresponding to each physical device among the plurality of physical devices from the resource library according to the network parameters and the names of the plurality of physical devices, and generating (405) the instance of the resource tree on the graphical user interface, wherein the resource block refers to a node of the resource tree.

9. The method according to claim 8, wherein the retrieving (404) a resource block corresponding to each physical device among the plurality of physical devices from the resource library according to the network parameters and the names of the plurality of physical devices, and generating (405) the instance of the resource tree comprises:
- retrieving the resource block corresponding to each physical device from the resource library according to the name of each physical device among the plurality of physical devices, and generating the corresponding instance of the resource block; and
- configuring the network parameters and the name of each physical device into the corresponding instance of the resource block, connecting, on the graphical user interface, the instances of any two resource blocks having a communication medium by ways of an adaptive network protocol, and generating an instance of the communication medium.

10. An information processing apparatus, comprising:
- a graphical interface module (51), configured to: provide a graphical user interface on which construction of a resource tree is performed by a user;
- a presetting module (52), configured to: store a preset resource block in a resource library, wherein the resource block is mapped to a resource of an application scenario, and the resource comprises: a physical device, human resources and general resources; and display the resource library on the graphical user interface; and
- an edit processing module (53), configured to: generate an instance of the resource tree in response to the construction of the resource tree.

11. An information processing apparatus,
- a presetting module (61), configured to: store a preset resource block in a resource library, wherein the resource block is mapped to a physical device of an application scenario;
- a scanning module (62), configured to: scan a plurality of physical devices in the application scenario by ways of a multicast DNS server, and obtain network parameters and names of the plurality of physical devices; and
- an edit processing module (63), configured to: retrieve a resource block corresponding to each physical device among the plurality of physical devices from the resource library according to the network parameters and the names of the plurality of physical devices, and generate the instance of the resource tree on the graphical user interface, wherein the resource block refers to a node of the resource tree.

12. An information processing platform, comprising:
at least one memory (701), configured to store computer-readable codes; and
at least one processor (702), configured to call the computer-readable codes to perform the steps in the method according to any one of claims 1 to 9.

13. A computer-readable medium, storing computer-readable instructions, the computer-readable instructions, when executed by a processor, causing the processor to perform the steps in the method according to any one of claims 1 to 9.

14. A computer program product, tangibly stored on a computer-readable medium and comprising computer-readable instructions, the computer-readable instructions, when executed, causing at least one processor to perform the method according to any one of claims 1 to 9.
